# EUROPEAN PATENT APPLICATION

(11) **EP 2 930 900 A1**
(43) Date of publication of application: **14.10.2015**
(21) Application number: 15160164.8
(22) Date of filing: 20.03.2015
(51) Int. Cl.: H04L 29/06, H04W 80/06, H04W 88/06

(54) **WIRELESS COMMUNICATION APPARATUS, WIRELESS COMMUNICATION METHOD, AND WIRELESS COMMUNICATION PROGRAM**

(30) Priority: 08.04.2014 JP 2014079628
(71) Applicant: FUJITSU LIMITED, Kawasaki-shi, Kanagawa 211-8588 (JP)
(72) Inventor: Uchino, Makoto, Kawasaki-shi, Kanagawa 211-8588 (JP); Iimori, Eiji, Kawasaki-shi, Kanagawa 211-8588 (JP); Hata, Yoshiaki, Kawasaki-shi, Kanagawa 211-8588 (JP)
(74) Representative: Wilding, Frances Ward

(57) **Abstract**

A wireless communication apparatus (10) generates sockets in a first wireless interface using a first communication network and a second wireless interface using a second communication network. Then, the wireless communication apparatus (10) executes wireless communication using the generated sockets. Then, when an application is executed, the wireless communication (10) apparatus controls the use of the sockets on the basis of the communication network used by the application.

## Description

The aspects of embodiments of the invention discussed herein are related to a wireless communication apparatus, a wireless communication system comprising the wireless communication apparatus, a wireless communication method, and a wireless communication program.

Mobile terminals, such as smart phones, have a communication means for connection to a mobile network, such as a long-term evolution (LTE) network or a 3^{rd} generation (3G) network and a communication means for connection to a wireless local area network (LAN) such as a wireless fidelity (Wi-Fi) network.

In general, the mobile terminal is connected to the wireless LAN with high priority in an environment in which the mobile terminal can be connected to both the mobile network and the wireless LAN. When the wireless LAN is not available, the mobile terminal switches to the mobile network and performs communication. Some mobile terminals have a link aggregation function of performing communication using the mobile network and the wireless LAN at the same time. For example, the mobile terminal performs communication related to an application B using the wireless LAN while performing communication related to an application A using the mobile network.
Patent Document 1: Japanese Laid-open Patent Publication No. 2008-136150
Patent Document 2: Japanese Laid-open Patent Publication No. 2011-166251

However, in the above-mentioned technique, when an application which can use only one communication network, such as universal serial bus (USB) dithering, is executed, the user needs to stop the link aggregation function, which results in low user convenience.

Accordingly, it is desirable to provide a wireless communication apparatus, a wireless communication method, and a wireless communication program which can improve user convenience.

According to an aspect of an embodiment of the invention, a wireless communication apparatus (10) includes a communication unit (27) that generates sockets in a first wireless interface using a first communication network and a second wireless interface using a second communication network and performs wireless communication using the generated sockets; and a use control unit (26) that, when an application is executed, controls the use of the sockets on the basis of the communication network used by the application.
The invention is described, by way of example only, with reference to the drawings, in which:
FIG. 1 is a diagram illustrating an example of the overall structure of a system according to a first embodiment;
FIG. 2 is a diagram illustrating an example of the hardware configuration of a mobile terminal according to the first embodiment;
FIG. 3 is a functional block diagram illustrating the functional structure of the mobile terminal according to the first embodiment;
FIG. 4 is a diagram illustrating an example of information registered in a conflict list;
FIG. 5 is a flowchart illustrating the flow of a process according to the first embodiment; and
FIG. 6 is a diagram illustrating a change in the state of the mobile terminal.

Preferred embodiments will be explained with reference to accompanying drawings. The invention is not limited to the embodiments.

### [a] First Embodiment

### Overall Structure

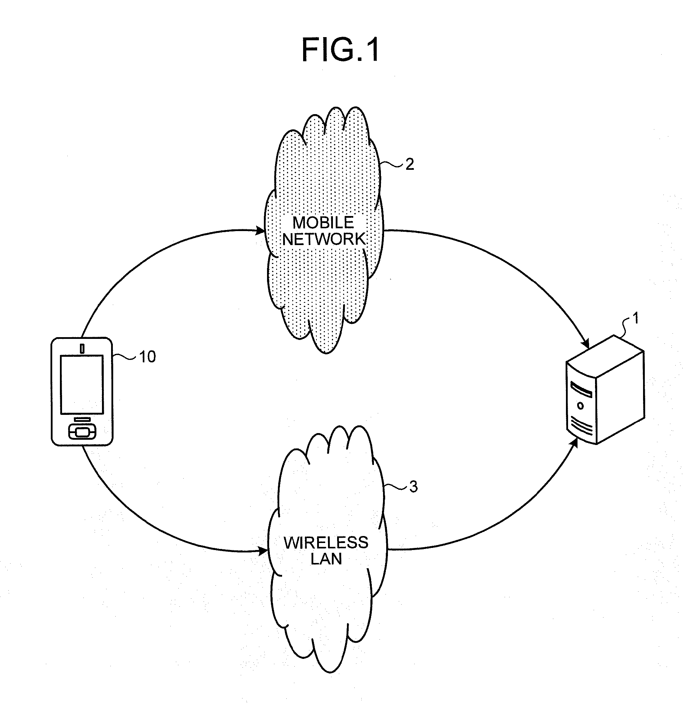

FIG. 1 is a diagram illustrating an example of the overall structure of a system according to a first embodiment. As illustrated in FIG. 1, in the system, a mobile terminal 10 and a Web server 1 are connected so as to communicate with each other through a mobile network 2 and a wireless LAN 3. In this embodiment, the mobile terminal 10 communicates with the Web server 1. However, the communication destination of the mobile terminal 10 is not particularly limited by the embodiment.

An example of the mobile network 2 is an LTE network or a 3G network and an example of the wireless LAN 3 is a Wi-Fi network or a worldwide interoperability for microwave access (WiMAX) network. For example, the number of apparatuses is an illustrative example and is not particularly limited. In this embodiment, an example in which the Wi-Fi network and the LTE network are used will be described.

The Web server 1 is a server apparatus that provides Web services to the client and is managed by, for example, a mobile phone company. The Web server 1 performs user authentication for a client terminal and provides various Web services to the authenticated client terminal.

The mobile terminal 10 is a client terminal that executes applications to communicate with the Web server 1 and is, for example, a smart phone, a mobile phone, or a notebook personal computer. The mobile terminal 10 includes antennas corresponding to each communication network and can perform communication using the communication networks at the same time.

For example, the mobile terminal 10 determines the ratio of the Wi-Fi network and the LTE network to be 7 : 3 in an environment in which the quality of the Wi-Fi network is higher than that of the LTE network. In this case, the mobile terminal 10 uses seven sockets for a Wi-Fi channel and uses three sockets for an LTE channel among 10 sockets for an application A, in order to transmit data.

That is, the mobile terminal 10 establishes a connection to the Wi-Fi network, using a Wi-Fi internet protocol (IP) address and a port number used by the application A, and the Wi-Fi IP address of the Web server 1 and the port number used by the application A. Then, the mobile terminal 10 opens the sockets and writes data to the sockets such that the Web server 1 reads the data. The Web server 1 returns a request from the mobile terminal 10 and the mobile terminal 10 receives data using the sockets. When the communication between the mobile terminal 10 and the Web server 1 is completed, the mobile terminal 10 closes the sockets. The mobile terminal 10 performs communication using seven Wi-Fi sockets among a total of 10 sockets to transmit data.

The mobile terminal 10 establishes a connection to the LTE network, using an LTE IP address and the port number used by the application A, and the LTE IP address of the Web server 1 and the port number used by the application A. Then, the mobile terminal 10 opens the sockets and writes data to the sockets such that the Web server 1 reads the data. The Web server 1 returns a request from the mobile terminal 10 and the mobile terminal 10 receives the data using the sockets. When the communication between the mobile terminal 10 and the Web server 1 is completed, the mobile terminal 10 closes the sockets. The mobile terminal 10 performs communication using three LTE sockets among a total of 10 sockets to transmit data.

In this state, the mobile terminal 10 generates sockets in a first wireless interface using the Wi-Fi network and a second wireless interface using the LTE network and performs wireless communication. When an application is executed, the mobile terminal 10 controls the use of the sockets on the basis of the communication network used by the application.

For example, the mobile terminal 10 performs a link aggregation function which allocates Wi-Fi and LTE sockets and transmits data. In this state, when the start of the application is detected, the mobile terminal 10 specifies a communication network which can be used by the application. When the specified application is an application which can use only the Wi-Fi network, the mobile terminal 10 suppresses the allocation of sockets to the LTE network and transmits data using only the Wi-Fi sockets.

As such, in the state in which the mobile terminal 10 uses the Wi-Fi network and the LTE network at the same time to transmit data, when an application which can use only the Wi-Fi network is executed, the mobile terminal 10 can suppress LTE socket communication and fix communication to Wi-Fi socket communication. That is, the mobile terminal 10 can automatically prevent socket allocation according to the type of application, while performing the link aggregation function. Therefore, it is possible to improve user convenience.

### Hardware Configuration

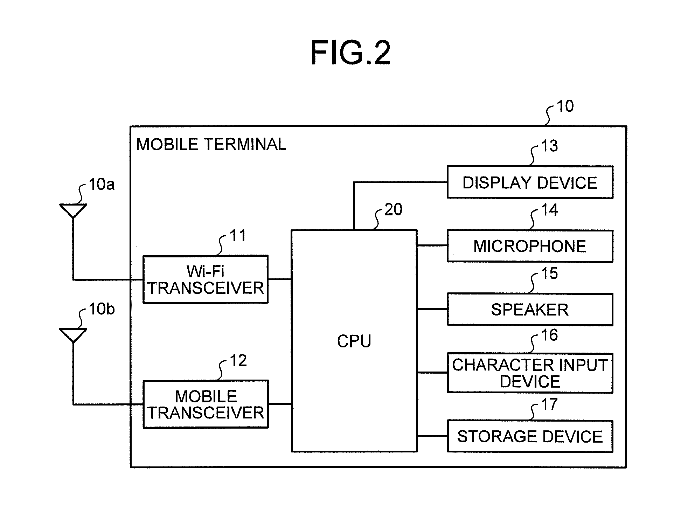

FIG. 2 is a diagram illustrating an example of the hardware configuration of the mobile terminal according to the first embodiment. As illustrated in FIG. 2, the mobile terminal 10 includes a Wi-Fi transceiver 11, a mobile transceiver 12, a display device 13, a microphone 14, a speaker 15, a character input device 16, a storage device 17, and a central processing unit (CPU) 20.

The Wi-Fi transceiver 11 performs communication through the wireless LAN 3, such as a Wi-Fi network, using an antenna 10a. A Wi-Fi IP address is set in the Wi-Fi transceiver 11. For example, the Wi-Fi transceiver 11 establishes a connection to the Web server 1, using the IP address, and transmits and receives data.

The mobile transceiver 12 performs communication through the mobile network 2, such as an LTE network, using an antenna 10b. An LTE IP address is set in the mobile transceiver 12. For example, the mobile transceiver 12 establishes a connection to the Web server 1, using the IP address, and transmits and receives data.

The display device 13 is, for example, a touch panel or a display and displays various kinds of information. The microphone 14 collects a voice and inputs the collected voice to the CPU 20. The speaker 15 outputs the voice input from the CPU 20.

The character input device 16 is, for example, a keyboard or a keyboard which is displayed on a touch panel, receives various inputs from the user, and outputs the inputs to the CPU 20. The storage device 17 is, for example, a memory or a hard disk and stores, for example, the programs executed by the CPU 20, the processing results which are generated by the programs executed by the CPU 20, and various tables.

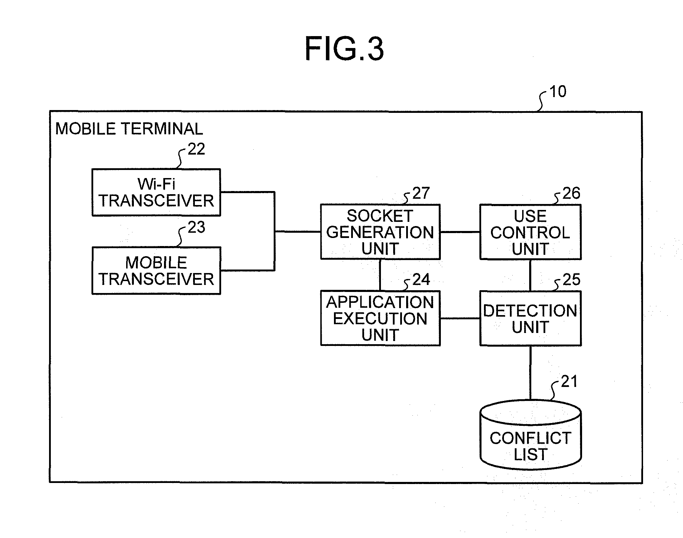

The CPU 20 is a processing unit which is in charge of all of the processes of the mobile terminal 10. The CPU 20 reads a program from the storage device 17 and performs processes. For example, the CPU 20 operates a process that performs processing which will be described after FIG. 3. In addition, two or more CPUs 20 may be provided.

### Functional Structure

FIG. 3 is a functional block diagram illustrating the functional structure of the mobile terminal according to the first embodiment. As illustrated in FIG. 3, the mobile terminal 10 includes a conflict list 21, a Wi-Fi transceiver 22, a mobile transceiver 23, an application execution unit 24, a detection unit 25, a use control unit 26, and a socket generation unit 27.

The conflict list 21 stores a list of applications which conflict with each other in communication. That is, the conflict list 21 is information which is registered in advance by, for example, the administrator and stores a list of applications which can use only one communication network. The applications stored in the conflict list 21 can perform communication, using the Wi-Fi network and the LTE network at the same time.

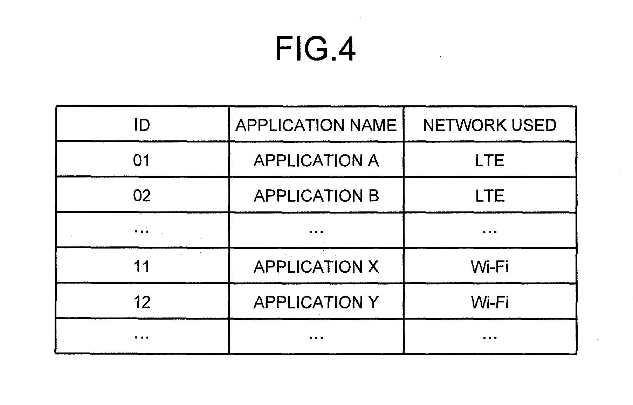

FIG. 4 is a diagram illustrating an example of the information registered in the conflict list. As illustrated in FIG. 4, the conflict list 21 stores an "ID, an application name, and a network used" so as to be associated with each other. The "ID" is an identifier for specifying the application, the "application name" is the name of the application, and the "network used" is information for specifying the communication network which can be used by the application. In the example illustrated in FIG. 4, the application A with an ID "01" can use only the LTE network and an application X with an ID "11" can use only the Wi-Fi network.

The Wi-Fi transceiver 22 is a processing unit that generates sockets to be used for the Wi-Fi network and transmits and receives data using the Wi-Fi network. Specifically, the Wi-Fi transceiver 22 establishes a connection to the communication destination, such as the Web server 1, on the Wi-Fi network and transmits data to the communication destination using the socket.

For example, the Wi-Fi transceiver 22 writes data to the socket using the connection which is established with the communication destination such as the Web server 1. The data is read by the communication destination. The communication destination returns the request from the mobile terminal 10 and the mobile terminal 10 receives the data using the socket. When the communication between the mobile terminal 10 and the communication destination is completed, the Wi-Fi transceiver 22 closes the socket.

When the communication destination writes data to the socket, the Wi-Fi transceiver 22 reads the data from the socket, using the connection established with the communication destination. In this way, the Wi-Fi transceiver 22 transmits and receives data using Wi-Fi socket communication.

The mobile transceiver 23 is a processing unit that generates sockets to be used for the LTE network and transmits and receives data using the LTE network. Specifically, the mobile transceiver 23 establishes a connection to the communication destination, such as the Web server 1, on the LTE network and transmits data to the communication destination using the socket.

For example, the mobile transceiver 23 writes data to the socket using the connection established with the communication destination and the communication destination reads the data. The communication destination returns the request from the mobile terminal 10 and the mobile terminal 10 receives the data using the socket. When the communication between the mobile terminal 10 and the communication destination is completed, the mobile transceiver 23 closes the socket.

When the communication destination writes data to the socket, the mobile transceiver 23 reads the data from the socket, using the connection established with the communication destination. In this way, the mobile transceiver 23 transmits and receives data using LTE socket communication.

The application execution unit 24 is a processing unit that executes applications. Specifically, the application execution unit 24 reads an application program desired by the user from, for example, the storage device 17, develops the program in the memory, and executes the application, in response to an instruction from the user.

The detection unit 25 is a processing unit that detects the communication network used by the application when the application is executed. Specifically, when the application execution unit 24 executes the application, the detection unit 25 acquires the name or ID of the application from the application. Then, the detection unit 25 determines whether the acquired name or ID has been registered in the conflict list 21.

Then, the detection unit 25 notifies the use control unit 26 of the determination result. For example, when the application A is executed, the detection unit 25 notifies the use control unit 26 that only the LTE network can be used. When the application X is executed, the detection unit 25 notifies the use control unit 26 that only the Wi-Fi network can be used. When an application with an application name "application XXX", which has not been registered in the conflict list 21, is executed, the detection unit 25 notifies the use control unit 26 that both the Wi-Fi network and the LTE network can be used.

The use control unit 26 is a processing unit that controls the use of the sockets on the basis of the communication network detected by the detection unit 25. Specifically, the use control unit 26 instructs the socket generation unit 27 to suppress the allocation of the socket to the communication network which has not been notified by the detection unit 25 and to perform communication using the socket of the available communication network which has been notified by the detection unit 25.

For example, when receiving a notice indicating that the Wi-Fi network can be used, the use control unit 26 instructs the socket generation unit 27 to allocate a new socket to the mobile transceiver 23 and to suppress the use of the socket which has been generated in the mobile transceiver 23. Examples of the instruction to suppress the use of the socket include an instruction to suppress the writing of data to the existing socket and an instruction to release the existing socket.

When receiving a notice indicating that both the Wi-Fi network and the LTE network can be used, the use control unit 26 instructs the socket generation unit 27 to perform the link aggregation function. That is, when the application which can use the two communication networks is executed, the use control unit 26 outputs an instruction to allocate the sockets to both communication networks to the socket generation unit 27. In addition, when the execution of the application which controls the use of the communication networks ends, the use control unit 26 switches communication to socket communication using the two communication networks.

The socket generation unit 27 is a processing unit that generates sockets in each of the Wi-Fi transceiver 22 and the mobile transceiver 23. Specifically, the socket generation unit 27 performs the link aggregation function which performs wireless communication using the Wi-Fi network and the LTE network at the same time. The socket generation unit 27 allocates the sockets in a predetermined unit, such as every ten sockets or each socket, at the ratio which is predetermined on the basis of the quality of wireless communication.

For example, when receiving an instruction to allocate sockets to both communication networks from the use control unit 26, the socket generation unit 27 allocates the sockets to each wireless interface at a predetermined ratio corresponding to the quality of each wireless communication network. For example, when the RSSI value of the Wi-Fi is greater than a threshold value, the socket generation unit 27 determines the socket allocation ratio as follows: WiFi : LTE = 7 : 3. Then, the socket generation unit 27 allocates new sockets at the determined socket allocation ratio. The allocation ratio can be arbitrarily set on the basis of, for example, radio quality.

When receiving a notice indicating that the Wi-Fi network can be used from the use control unit 26, the socket generation unit 27 suppresses the allocation of a new socket to the mobile transceiver 23 and allocates a new socket to the Wi-Fi transceiver 22, until the execution of the application ends. In addition, the socket generation unit 27 suppresses data communication using the socket which has been generated in the mobile transceiver 23 until the execution of the application ends. In this case, the socket generation unit 27 can close the socket which has been generated in the mobile transceiver 23.

### Flow of Process

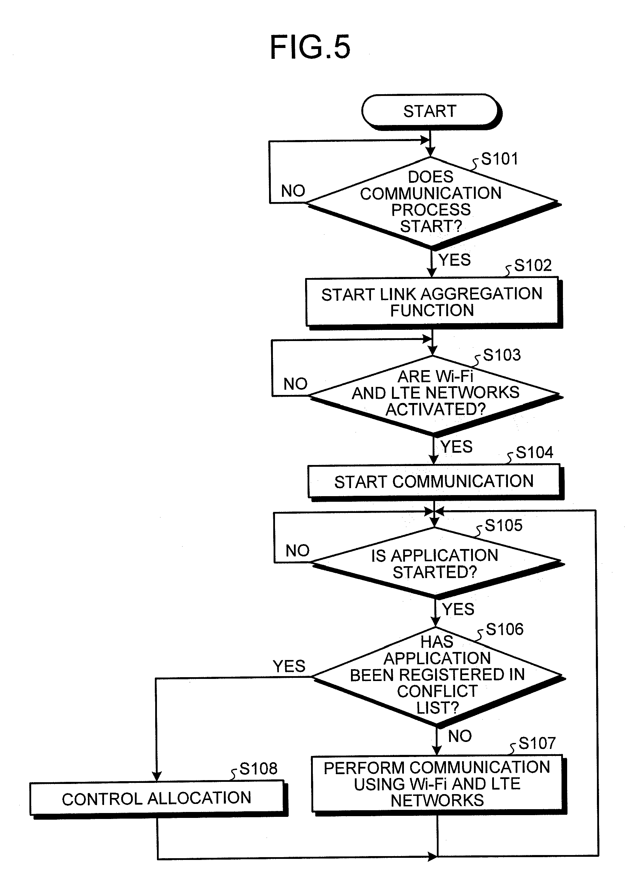

FIG. 5 is a flowchart illustrating the flow of the process according to the first embodiment. As illustrated in FIG. 5, when a communication process starts (step S101: Yes), the socket generation unit 27 of the mobile terminal 10 starts the link aggregation function (step S102). When the Wi-Fi network and the LTE network are activated (step S103: Yes), the socket generation unit 27 starts communication (step S104).

For example, when the mobile terminal 10 starts up or when the user inputs an instruction to start the link aggregation function, the socket generation unit 27 starts the allocation of sockets to both communication networks. When the allocation of the sockets is completed, the socket generation unit 27 starts data communication using both communication networks at the same time.

Then, when the application execution unit 24 starts to execute an application (step S105: Yes), the detection unit 25 determines whether the executed application has been registered in the conflict list 21 (step S106).

When it is determined that the application has not been registered in the conflict list (step S106: No), the use control unit 26 performs data communication using the Wi-Fi network and the LTE network at the same time (step S107). On the other hand, when it is determined that the application has been registered in the conflict list (step S106: Yes), the use control unit 26 controls the allocation of the sockets to the communication networks registered in the conflict list 21 and performs data communication (step S108).

### Change in State

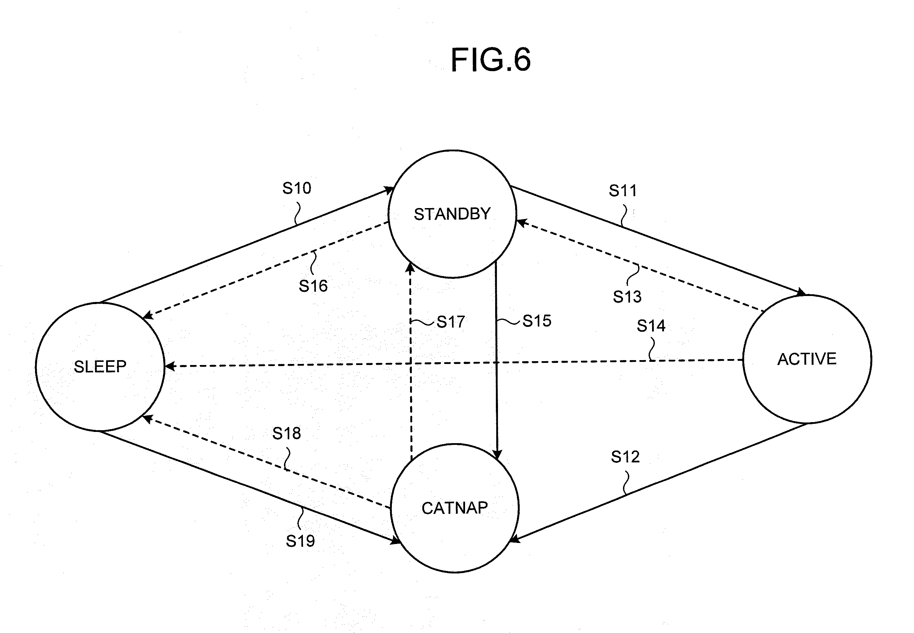

FIG. 6 is a diagram illustrating a change in the state of the mobile terminal. As illustrated in FIG. 6, the wireless communication control states of the mobile terminal include "sleep", "standby", "active", and "catnap" states.

In the sleep state, the setting of the link aggregation function is turned off. For example, the sleep state corresponds to a state immediately after the mobile terminal 10 starts up or a case in which the user intentionally turns off the link aggregation function.

In the standby state, the mobile terminal waits for the establishment of the simultaneous connection of both wireless communication networks. For example, the standby state corresponds to a state in which the mobile terminal 10 starts up and wireless communication automatically starts, a state in which the user intentionally turns on the link aggregation function, and a state in which radio wave conditions are improved and both communication networks can be used.

In the active state, the link aggregation function controls communication. For example, the active state is a state in which a plurality of data communications generated when one application is executed are allocated to the Wi-Fi sockets or the LTE sockets and are then performed.

In the catnap state, the operation of a conflict function is detected and the conflict function is temporarily stopped. For example, the catnap state is a state in which data communication is performed using the fixed communication network since the executed application is not capable of using one communication network. In this state, the link aggregation function is in an on state and the allocation of the sockets is fixed to one communication network.

When the mobile terminal 10 starts up, it becomes the "sleep" state. When a predetermined period of time has elapsed from the sleep state or when the user starts the link aggregation function, the mobile terminal 10 changes to the "standby" state and prepares for the start of the link aggregation function (step S10). When a connection to both communication networks is established and the link aggregation function starts in the "standby", the mobile terminal 10 changes to the "active" state and performs data communication using the link aggregation function (step S11).

When the executed application has been registered in the conflict list 21 in the "active" state, the mobile terminal 10 changes to the "catnap" state and fixes the communication network used for data communication to one of the two communication networks, even though the link aggregation function is being performed (step S12).

In the "active" state, when the conditions of one of the two communication networks are worsened or when the user inputs a request to form the link aggregation again, the mobile terminal 10 changes to the "standby" state and prepares for the start of the link aggregation function (step S13).

In the "active" state, when the conditions of both communication networks are worsened or when the user ends the link aggregation function, the mobile terminal 10 changes to the "sleep" state and stops the link aggregation function (step S14).

During preparation for the link aggregation function in the "standby" state, when the executed application has been registered in the conflict list 21, the mobile terminal 10 changes to the "catnap" state and fixes the communication network used for data communication to one of the two communication networks (step S15).

In the "standby" state, when the conditions of both communication networks are worsened or when the user ends the link aggregation function, the mobile terminal 10 changes to the "sleep" state and stops the link aggregation function (step S16).

In the "catnap" state, when the executed application ends, the mobile terminal 10 changes to the "standby" state and prepares for the start of the link aggregation function (step S17). When the conditions of both communication networks are worsened or when the user ends the link aggregation function, the mobile terminal 10 changes to the "sleep" state and stops the link aggregation function (step S18).

In the "sleep" state, when the executed application has been registered in the conflict list 21, the mobile terminal 10 changes to the "catnap" state and fixes the communication network used for data communication to one of the two communication networks (step S19).

### Effect

As such, the mobile terminal 10 adds the state (catnap state) in which the state management of the link aggregation function is changed, the conflict function is detected, and the function is temporarily stopped. The mobile terminal 10 can use a wireless interface fixing function, such as a USB tethering function, without inactivating the link aggregation function.

Therefore, the mobile terminal 10 can avoid the conflict between the link aggregation function and the wireless interface fixing function, such as the USB tethering function, and improve the convenience or operability of the user.

### [b] Second Embodiment

The first aspect of an embodiment of the invention has been described above. However, the invention is not limited to the above-described embodiment, but various modifications and changes of the invention can be made.

### Notification of Application

In the above-described embodiment, the mobile terminal 10 determines whether there is an application whose link aggregation function is to be limited, with reference to the conflict list 21. However, the invention is not limited thereto. For example, the mobile terminal 10 may receive information about available communication networks from the application.

For example, when receiving an identifier indicating the Wi-Fi network from the executed application, the mobile terminal 10 fixes data communication to Wi-Fi socket communication. When receiving an identifier indicating the LTE network from the executed application, the mobile terminal 10 fixes data communication to LTE socket communication. When no identifier is received from the executed application, the mobile terminal 10 performs simultaneous communication using the link aggregation function.

### Structure of System and Others

Each structure of the apparatus illustrated in the drawings is not always the physical structure illustrated in the drawings. That is, the components can be dispersed or integrated in an arbitrary unit. In addition, all or some of the processing functions of each apparatus can be implemented by a CPU and the program which is analyzed and executed by the CPU or they can be implemented as hardware by a wired logic.

In addition, among the processes described in this embodiment, all or some of the processes that are automatically performed may be manually performed. Alternatively, all or some of the processes that are manually performed may be automatically performed by a known method. The processing procedure, the control procedure, the specific names, and information including various kinds of data and parameters which are described in the specification and the drawings may be arbitrarily changed unless otherwise specified.

The mobile terminal 10 according to this embodiment can read a wireless communication control program and execute the wireless communication control program to implement the same functions as those described with reference to, for example, FIG. 3. For example, the mobile terminal 10 develops, in the memory, a program which has the same functions as the Wi-Fi transceiver 22, the mobile transceiver 23, the application execution unit 24, the detection unit 25, the use control unit 26, and the socket generation unit 27. Then, the mobile terminal 10 executes the process which implements the same processes as the Wi-Fi transceiver 22, the mobile transceiver 23, the application execution unit 24, the detection unit 25, the use control unit 26, and the socket generation unit 27 to perform the same processes as those in the above-described embodiment.

The program can be distributed through a network such as the Internet. In addition, the program can be recorded on a computer-readable recording medium, such as a hard disk, a flexible disk (FD), a CD-ROM, an MO, or a DVD and the computer can read the program from the recording medium and execute the program.

According to the embodiment, it is possible to improve user convenience.

## Claims

1. A wireless communication apparatus (10) comprising:
a communication unit (27) that generates sockets in a first wireless interface using a first communication network and a second wireless interface using a second communication network and performs wireless communication using the generated sockets; and
a use control unit (26) that, when an application is executed, controls the use of the sockets on the basis of the communication network used by the application.

2. The wireless communication apparatus according to claim 1,
wherein the use control unit (27) generates the socket in the first wireless interface corresponding to the first communication network used by the application and suppresses the generation of the socket in the second wireless interface corresponding to the second communication network.

3. The wireless communication apparatus according to claim 2,
wherein the use control unit (27) removes the socket which is generated in the second wireless interface.

4. The wireless communication apparatus according to any of claims 1 to 3, further comprising:
a storage unit (21) that stores information for specifying an application which uses a limited communication network and information for specifying the communication network used by the application so as to be associated with each other,
wherein, when the executed application corresponds to the application stored in the storage unit (21), the use control unit (27) controls the use of the sockets on the basis of the communication network associated with the executed application.

5. A wireless communication system comprising the wireless communication apparatus of any of claims 1 to 4.

6. A wireless communication method comprising:
generating sockets in a first wireless interface using a first communication network and a second wireless interface using a second communication network,
executing wireless communication using the generated sockets, and
controlling the use of the sockets on the basis of the communication network used by an application when the application is executed.

7. A wireless communication program that causes a computer to execute:
generating sockets in a first wireless interface using a first communication network and a second wireless interface using a second communication network;
executing wireless communication using the generated sockets; and
controlling the use of the sockets on the basis of the communication network used by an application when the application is executed.
